# EUROPEAN PATENT SPECIFICATION

(11) **EP 1 159 538 B1**
(45) Date of publication and mention of the grant of the patent: **25.06.2003**
(21) Application number: 00905457.8
(22) Date of filing: 11.02.2000
(51) Int. Cl.: F16B 31/02

(54) **THREADED BOLT HAVING MEASUREMENT PLANES**
GEWINDEBOLZEN MIT MESSFLÄCHEN
BOULON FILETE A PLANS DE MESURE

(30) Priority: 18.03.1999 NL 1011591
(43) Date of publication of application: 05.12.2001
(73) Proprietor: Koninklijke Nedschroef Holding N.V., 5707 LC Helmond (NL)
(72) Inventor: KERSTEN, Ferdinand, NL-5422 AS Gemert (NL)
(74) Representative: De Hoop, Eric
(86) International application number: PCT/NL00/00087
(87) International publication number: WO 00/055511

(56) References cited:
- EP-A- 0 459 365
- EP-A- 0 759 333
- WO-A-97/44644
- US-A- 5 352 065

## Description

The invention relates to a threaded bolt provided with measurement planes for use in ultrasonic length measurement. After the threaded bolt has been fixed in a connection, such a measurement is performed to determine the length change of the threaded bolt, in order to find out the tension within the threaded bolt in that way.

It is known to provide a threaded bolt with measurement planes by arranging measurement planes at a recess or an elevation with respect to the actual end planes at both the head end and at the insertion end by means of cold deformation and finishing. This threaded bolt is described in EP-A-0.459.365. EP-A-0.459.365 discloses a threaded bolt according to the preamble of claim 1.

The presence of several radial planes at one end or both ends, situated at various axial distances measured along the centre line of the threaded bolt, however has a detrimental influence on the recognizability and the clearness of the measurement results.

It is an object of the invention to improve on this.

Another object of the invention is to provide a threaded bolt, with which ultrasonic length measurements on the bolt can unambiguously be performed.

From one aspect the invention to that end provides a threaded bolt having a proximal head end and a distal insertion end, wherein the head end and the insertion end have been provided with radial measurement planes for use in ultrasonic length measurement for determining the tension in the threaded bolt after it has been placed in a connection, wherein the measurement plane at the insertion end has been formed by the flat bottom of a recess at the insertion end, wherein the recess is bounded by a circumferential wall, which -seen in cross-section- at the outermost distal end of the bolt at a point changes into the flank of the insertion end via a buckle or curve.

In this manner it is prevented that there are more radial planes at the insertion end than the measurement plane, so that the ultrasonic length measurement can only be related to the measurement plane at that location and double signals are prevented. Because of the recess the measurement plane is protected from pollution and damage.

A further embodiment of the invention provides a threaded bolt having a proximal head end and a distal insertion end, wherein the head end and the insertion end have been provided with radial measurement planes for use in ultrasonic length measurement for determining the tension in the threaded bolt after it has been placed in a connection, wherein the measurement plane at the insertion end has been formed by the flat bottom of a recess at the insertion end, wherein the recess is bounded by a circumferential wall, wherein the outermost distal end of the threaded bolt is formed by a circular line.

The transition from the circumferential wall of the recess into the flank of the distal end may run according to a convex course, but preferably has a sharp buckle shape, to rule out the occurrence of murmur during the measurement as much as possible.

Preferably the circumferential wall of the recess forms a conical surface which is oblique with respect to the bolt centre line, the angle of which is maximally 75° with respect to the bolt centre line, preferably also more than 45°.

Preferably the flank in the distal end portion, which is contiguous to the circumferential wall of the recess, forms a flank conical surface oblique with respect to the bolt centre line, the angle of which is maximally 45° with respect to the bolt centre line. Preferably the flank conical surface at the proximal side changes into the cylindrical plane via a flank conical surface which is less oblique with respect to the bolt centre line, for instance at 25-35°, which cylindrical plane may or may not be contiguously provided with the thread. Alteratively the distal end of the bolt provided with the aforementioned recess is truncated at the flank.

Preferably the recess has been formed by means of an upsetting treatment of the insertion end. As a result of said upsetting treatment the distal end of the bolt can be provided with its final form in one go. Alternatively, apart from the upsetting treatment for forming the recess, said oblique flank can be obtained by means of a machining treatment.

Another proposal is known from US patent specification 4.846.001, in which a threaded bolt is shown of which the head has been provided with a recess with a measurement plane in it, which has been made sufficiently smooth/level by finishing, in order to be used in ultrasonic measuring. The recess is used for accommodating a piezo-electric sensor. In another embodiment the recess is absent and the sensor is placed on top of the end plane at the head.

It is a further object of the invention to provide a threaded bolt of the kind mentioned in the preamble, which can easily be manufactured or is manufactured and able to provide reliable measurement results.

Preferably the measurement plane has been arranged at the insertion end by means of a upsetting treatment.

Said upsetting treatment can advantageously be performed during a heading treatment performed in a bolt machine, also known as "bolt maker". In such a bolt machine the upsetting of the head takes place in one operation. During said upsetting the measurement planes can be realized at both ends, in which the exact axial distance between both measurement planes can be determined.

Alternatively the upsetting operation for making the measurement planes may take place during the subsequent shank reduction.

By way of a further alternative instead of by means of upsetting, the measurement plane at the insertion end can indeed be made in the same bolt machine, but then in a following station, where the point is made. This then takes place by means of a machining treatment.

The invention will now be elucidated on the basis of the examples shown in the attached drawings, in which:
Figure 1 shows a threaded bolt according to the invention, having a recessed measurement plane at the distal end;
Figure 1A shows a detail of the distal end of the threaded bolt of figure 1;
Figures 2A and 2B show two exemplary embodiments of another threaded bolt according to the invention;
Figure 3A shows a view of a bolt machine for manufacturing a threaded bolt according to the invention;
Figure 3B shows consecutive stations within the bolt machine of figure 3A; and
Figure 4 shows a possible embodiment of the point making machine accommodated in the bolt machine according to figure 3B.

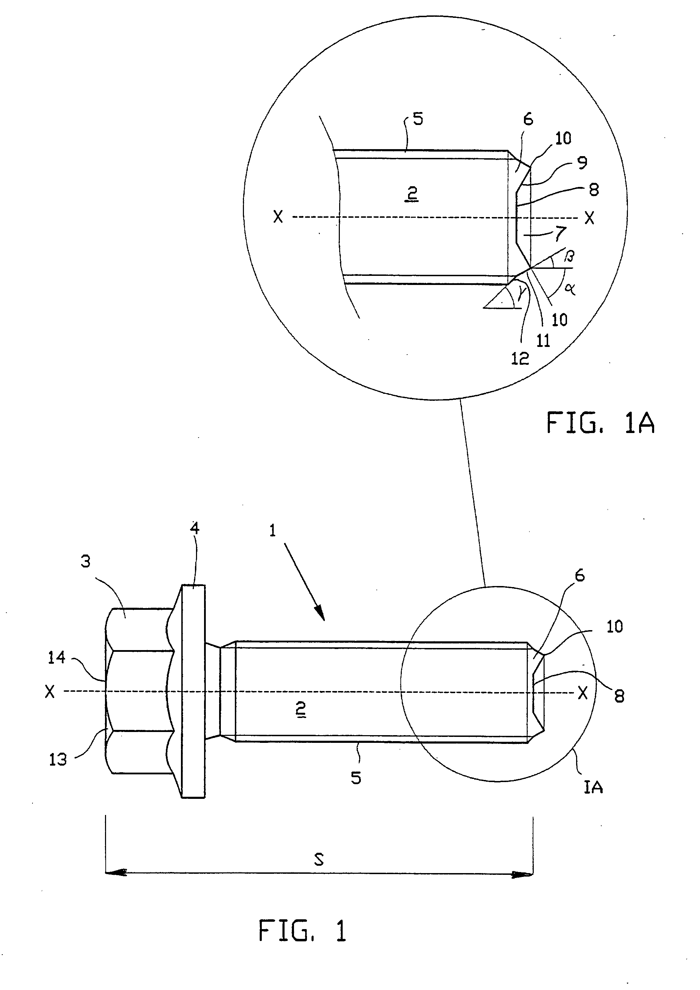

The threaded bolt 1 shown in the figures 1 and 1A comprise a shank 2 having a widened head 3 with flange 4, in which a thread 5 has been arranged on the shank 2. The distal end 6 of the shank 2 and thus the bolt 1 is shown enlarged in figure 1A. In it it can be seen that a recess 7 has been made in the distal end 6, which recess is axially bounded by a flat bottom 8 which extends perpendicular to the centre line X of the bolt 1, and is radially bounded by an inclined circumferential plane 9 running concentrically about the centre line X, which plane 9 is at angle α of 45°-75° with respect to the centre line X. Via a sharp, line-shaped transition 10, which in end view forms a circular line, the distal end 6 changes radially to the outside into an inclined circumferential plane 11 which is also concentric with respect to the centre line X, which plane is at an angle β with respect to the centre line X, β maximally being 45°. It can be seen that the inclined circumferential plane 11 via a buckle changes into a comparable inclined circumferential plane 12, which however is at an angle γ with respect to the centre line X, which is different from the angle β, and here is 25 to 35°.

At the other end a flat plane 14 has also been provided on the end plane 113, which just like plane 9 is perpendicular to the centre line X and just like plane 8 is suitable to serve as measurement plane in ultrasonic measurements. The plane parallelism here amounts to at least 0.05 mm.

The recess 7 and the measurement plane 8 can be realized in a simple manner in a (usually steel) bolt by upsetting the distal end 6 in a so-called pointing machine. In the same upsetting treatment the circumferential planes 11 and 12 can be made. Alternatively said planes 11 and 12 can be made by means of a machining treatment, in accordance with what will be stated in relation to figure 4.

During measuring the sensor will be placed against the measurement plane 14, possibly with the help of a very thin layer of contact adhesive. With the help of ultrasonic measurement the distance S, measured in a direction parallel to the centre line X, between the planes 8 and 14 (against which the sensor has been placed) can be exactly measured and determined. With that the tension in the bolt can be known. The accuracy of said ultrasonic measurement is improved as a result of only one radially oriented plane 8 being present in the distal end 6. Double measurement signals are prevented in this way.

By way of example -with a diameter of the circular line 10 of approximately 12 mm- the diameter of the plane 8 may be 4 mm.

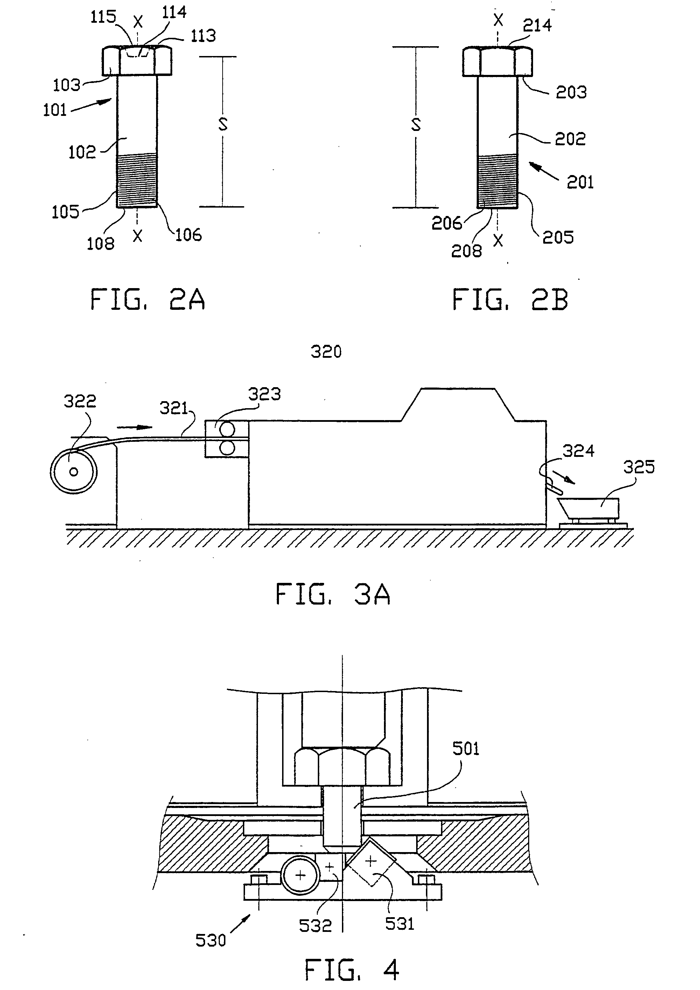

Just like the measurement planes of the threaded bolt to be discussed below and shown in the figures 2A and 2B, the measurement planes 8 and 14 may be realised without final processing operation, that means that for instance for the plane 8 said upsetting treatment is the last treatment of said plane.

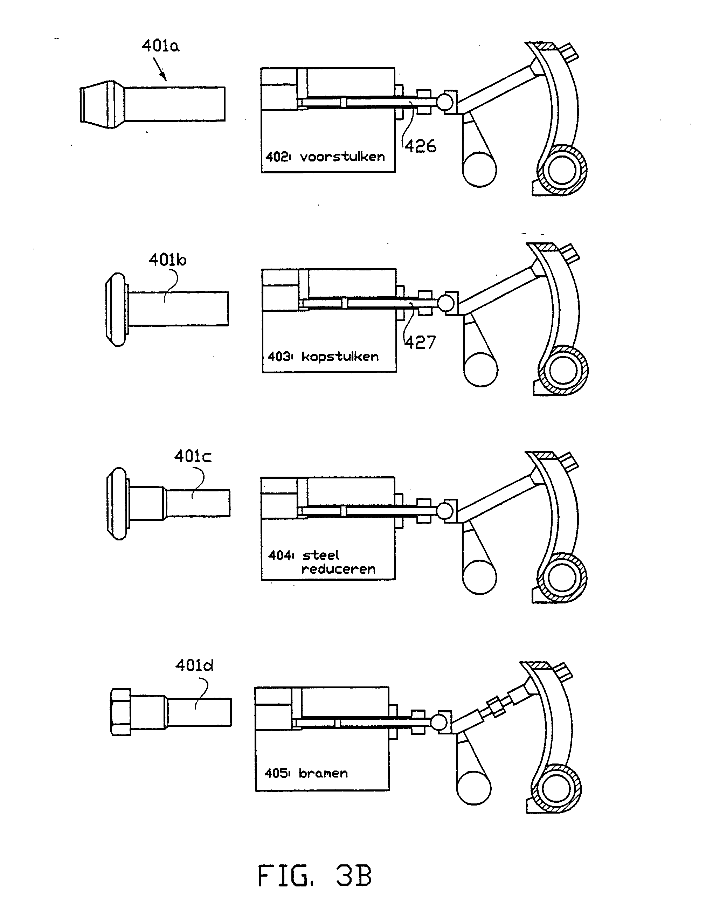

In figure 2A comparable bolt parts are shown with comparable reference numbers, increased by 100. Thus the bolt 101 is provided with a distal measurement plane 108 and with a proximal measurement plane 114, which forms the bottom of a recess 115 in the proximal end plane 113 of the bolt 101, in which recess the sensor may be placed. In this case the distance S between the measurement planes 108 and 114 is exactly known beforehand. The recess 115 and the measurement plane 114 have been realised during flat pre-upsetting (also see figure 3B), without final processing treatment (such as grinding) of said measurement plane. The measurement plane 108 has been formed here during upsetting, also without final processing treatment of said plane.

In figure 2B an alternative threaded bolt 201 has been shown, in which the same parts have the same reference numbers again, increased by 100. In this case the measurement planes 208 and 214 have been formed at both the proximal end and at the distal end also the end plane of the bolt 201. Just like the measurement plane 108 the measurement plane 208 extends over at least almost the entire diameter of the distal end, or insertion end.

In figure 3A the bolt machine is shown with which the bolts according to the figures 1, 2A, and 2B and alternative embodiments can be made. Metal wire 221 is supplied from a roll 222, passes through the supply end 223 of the bolt machine 220 and is processed in there into threaded bolts, which have been provided with the measurement planes according to the invention and are discharged at the discharge end 224, where they are collected in a tray 225.

In the bolt machine 220 there are a thread cutter, for cutting a workpiece at a desired volume for the bolt, subsequently (see figure 3B) a station 402 for pre-upsetting, after which the workpiece 401a is obtained, a station 403 for heading, after which a workpiece 401b is obtained, then a station 404 for reducing the shank, after which a workpiece 401c is obtained, and then a station 405 for trimming, after which a workpiece 401d is obtained. The workpieces 401d are subsequently subjected to a point-making treatment in a pointing machine accommodated in the same bolt machine 320, and after that to a thread rolling treatment, also in the same bolt machine 320.

As stated, the measurement planes in the bolts according-to the invention can be arranged by cold deformation during heading, in station 403, either by integrally forming a recess in the head or not. During this upsetting of the head itself use is made of an especially formed stamp in station 403. For making the measurement plane at the distal or insertion end a push-out pin 426 or 427, especially formed for that purpose, can be used, for deforming the distal end in the wanted manner by upsetting, in station 402 or 402.

Thus without particular further provisions a threaded bolt can be realised having measurement planes which are suitable for ultrasonic length measurements.

The pointing machine 530 of figure 4, accommodated in the bolt machine 320, can alternatively be used for making the measurement plane at the distal end which is formed by the end plane of the distal end itself. As can be seen two cutter plates 531 and 532 have been arranged, which are hingeable and can be adjusted in angular position. The cutter plate 531 is positioned inclined and the cutter plate 532 horizontally, to cut the measurement plane. Here again the exact distance between both the measurement/end planes is known. Both cutter plates are rotated about the insertion end, whereas the bolt is held against rotation.

## Claims

1. Threaded bolt (1) having a proximal head end (3) and a distal insertion end (6), wherein the head end (3) and the insertion end (6) have been provided with radial measurement planes (14;8) for use in ultrasonic length measurement for determining the tension in the threaded bolt (1) after it has been placed in a connection, wherein the measurement plane (8) at the insertion end (6) has been formed by the flat bottom of a recess (7) at the insertion end, wherein the recess is bounded by a circumferential wall (9), **characterized in that** the circumferential wall (9) -seen in cross-section- at the outermost distal end of the bolt at a point (10) changes into a flank (11) of the insertion end via a buckle or curve.

2. Threaded bolt according to claim 1, wherein the outermost distal end of the threaded bolt (1) is formed by a circular line (10).

3. Threaded bolt according to claim 1 or 2, wherein the change from the circumferential wall (9) of the recess (7) into the flank (11) runs according to a convex course.

4. Threaded bolt according to claim 1 or 2, wherein the change from the circumferential wall (9) of the recess (7) to the flank (11) has a sharp buckle shape.

5. Threaded bolt according to any one of the preceding claims, wherein the circumferential wall (9) of the recess (7) forms a conical surface which is oblique with respect to the bolt centre line (X-X), the angle of which is maximally 75° with respect to the bolt centre line, preferably also more than 45°.

6. Threaded bolt according to any one of the preceding claims, wherein the flank (11) in the end portion which is contiguous to the circumferential wall (9) of the recess forms a flank conical surface oblique with respect to the bolt centre line (X-X), the angle of which is maximally 45° with respect to the bolt centre line.

7. Threaded bolt according to claim 6, wherein the flank conical surface (11) at the proximal side changes into a cylindrical plane via a surface (12) which is less oblique with respect to the bolt centre line (X-X), for instance at 25-35°, which cylindrical plane may or may not be contiguously provided with the thread (5).

8. Threaded bolt according to any one of the preceding claims 1-7, wherein the distal end (6) of the bolt (1) provided with the aforementioned recess is truncated.

9. Threaded bolt according to any one of the preceding claims, wherein the recess (7) has been formed by means of one single upsetting treatment of the insertion end (6).

10. Threaded bolt according to claim 5 or any one of the claims 6-9 when dependent from claim 5, wherein said oblique flank (11,12) has been obtained by means of a machining treatment.

11. Threaded bolt according to any one of the preceding claims, wherein the recess (7) and/or the measurement plane (8) on the insertion end (6) has been arranged without final processing operation.

12. Threaded bolt according to any one of the preceding claims, wherein the measurement plane (14) at the head end (3) is manufactured in the same way as the measurement plane at the insertion end, preferably in the same operation.

13. Threaded bolt according to any one of the preceding claims, wherein the measurement plane (8) at the insertion end (6) has been arranged during the machining treatment of the insertion end in a point-making machine accommodated in a bolt machine.

14. Threaded bolt according to any one of the preceding claims, wherein the measurement plane (14) at the head end (3) is located recessed.

## Patentansprüche

1. Gewindebolzen (1) mit einem proximalen Kopfende (3) und einem distalen Einsteckende (6), wobei das Kopfende (3) und das Einsteckende (6) mit radialen Messflächen (14;8) für Gebrauch bei Ultraschallängenmessung zum Bestimmen der Spannung in dem Gewindebolzen (1) nach Aufstellung in einer Verbindung, versehen sind, wobei die Messfläche (8) an dem Einsteckende (6) durch den flachen Boden einer Aussparung (7) an dem Einsteckende gebildet ist, wobei die Aussparung durch eine umlaufende Wand (9) begrenzt wird, **dadurch gekennzeichnet, daß** die umlaufende Wand (9) - in Querschnitt betrachtet - an dem äußersten distalen Ende des Bolzens auf einem Punkt (10) über einen Knick oder eine Kurve in eine Flanke (11) des Einsteckendes übergeht.

2. Gewindebolzen nach Anspruch 1, wobei das äußerste distale Ende des Gewindebolzens (1) durch eine Kreislinie (10) gebildet wird.

3. Gewindebolzen nach Anspruch 1 oder 2, wobei der Übergang von der umlaufenden Wand (9) der Aussparung (7) in die Flanke (11) gemäß einem konvexen Lauf läuft.

4. Gewindebolzen nach Anspruch 1 oder 2, wobei der Übergang von der umlaufenden Wand (9) der Aussparung (7) in die Flanke eine scharfe Knickform hat.

5. Gewindebolzen nach einem der vorhergehenden Ansprüche, wobei die umlaufende Wand (9) der Aussparung (7) eine konische Oberfläche bildet, die bezüglich der Bolzenmittellinie (X-X) schräg ist, dessen Winkel bezüglich der Bolzenmittellinie maximal 70° ist, vorzugsweise auch mehr als 45°.

6. Gewindebolzen nach einem der vorhergehenden Ansprüche, wobei die Flanke (11) in dem an der umlaufenden Wand (9) der Aussparung grenzenden Endabschnitt eine bezüglich der Bolzenmittellinie (X-X) schräge konische Flankenoberfläche bildet, dessen Winkel bezüglich der Bolzenmittellinie maximal 45° ist.

7. Gewindebolzen nach Anspruch 6, wobei die konische Flankenoberfläche (11) an der proximalen Seite über eine minder schräge Oberfläche bezüglich der Bolzenmittellinie (X-X) in eine zylindrische Fläche übergeht, z.B. bei 25°-35°, welche zylindrische Fläche ja oder nicht angrenzend mit dem Gewinde (5) versehen ist.

8. Gewindebolzen nach einem der vorhergehenden Ansprüche (1-7), wobei das distale Ende (6) des Bolzens (1) mit der vorhergenannten Aussparung versehen, abgestumpft wird.

9. Gewindebolzen nach einem der vorhergehenden Ansprüche, wobei die Aussparung (7) durch eine einzige Stauchbehandlung des Einsteckendes (6) gebildet ist.

10. Gewindebolzen nach Anspruch 5 oder einem der Ansprüche 6-9 wenn abhängig von Anspruch 5, wobei die schräge Flanke (11, 12) durch eine spanende Bearbeitung erhalten wird.

11. Gewindebolzen nach einem der vorhergehenden Ansprüche, wobei die Aussparung (7) und/oder die Messfläche (8) auf dem Einsteckende (6) ohne Nachbearbeitungshandlung angeordnet ist.

12. Gewindebolzen nach einem der vorhergehenden Ansprüche, wobei die Messfläche (14) an dem Kopfende (3) auf dieselbe Weise wie die Messfläche an dem Einsteckende, vorzugsweise in derselben Behandlung, hergestellt ist.

13. Gewindebolzen nach einem der vorhergehenden Ansprüche, wobei die Messfläche (8) an dem Einsteckende (6) während der spanenden Bearbeitung von dem Einsteckende in einer Punktmaschine, in einer Bolzenmaschine aufgenommen, angeordnet ist.

14. Gewindebolzen nach einem der vorhergehenden Ansprüche, wobei die Messfläche (14) an dem Kopfende (3) vertieft gelegen ist,

## Revendications

1. Boulon fileté (1) ayant une extrémité de tête proximale (3) et une extrémité d'insertion distale (6), dans lequel l'extrémité de tête (3) et l'extrémité d'insertion (6) sont munies de plans de mesure radiaux (14 ; 8) destinés à être utilisés dans une mesure de longueur par ultrasons pour déterminer la traction dans le boulon fileté (1) après qu'il ait été placé dans une connexion, dans lequel le plan de mesure (8) situé au niveau de l'extrémité d'insertion (6) est formé par le fond plat d'un évidement (7) situé au niveau de l'extrémité d'insertion, dans lequel l'évidement est délimité par une paroi circonférentielle (9), **caractérisé en ce que** la paroi circonférentielle (9), vue en coupe transversale, à l'extrémité distale la plus extérieure du boulon, au niveau d'un point (10) devient un flanc (11) situé au niveau de l'extrémité d'insertion par l'intermédiaire d'un gauchissement ou d'une incurvation.

2. Boulon fileté selon la revendication 1, dans lequel l'extrémité distale la plus extérieure du boulon fileté (1) est formée par une ligne circulaire (10).

3. Boulon fileté selon la revendication 1 ou 2, dans lequel le changement de la paroi circonférentielle (9) de l'évidement (7) en flanc (11) s'effectue selon une course convexe.

4. Boulon fileté selon la revendication 1 ou 2, dans lequel le changement de la paroi circonférentielle (9) de l'évidement (7) en flanc (11) a une forme de gauchissement aigu.

5. Boulon fileté selon l'une quelconque des revendications précédentes, dans lequel la paroi circonférentielle (9) de l'évidement (7) forme une surface conique qui est oblique par rapport à l'axe du boulon (X-X), dont l'angle est de 75° au maximum par rapport à l'axe du boulon, de préférence également supérieur à 45°.

6. Boulon fileté selon l'une quelconque des revendications précédentes, dans lequel le flanc (11) situé dans la partie d'extrémité qui est contiguë à la paroi circonférentielle (9) de l'évidement forme une surface conique de flanc oblique par rapport à l'axe de boulon (X-X), dont l'angle est au maximum de 45° par rapport à l'axe de boulon.

7. Boulon fileté selon la revendication 6, dans lequel la surface conique de flanc (11) située au niveau du côté proximal devient un plan cylindrique par l'intermédiaire d'une surface (12) qui est moins oblique par rapport à l'axe de boulon (X-X), par exemple de 25 à 35°, lequel plan cylindrique peut être, ou ne pas être, agencé de manière contiguë au filet (5).

8. Boulon fileté selon l'une quelconque des revendications 1 à 7, dans lequel l'extrémité distale (6) du boulon (1) munie de l'évidement mentionné ci-dessus est tronquée.

9. Boulon fileté selon l'une quelconque des revendications précédentes, dans lequel l'évidement (7) a été formé par l'intermédiaire d'un traitement de refoulement unique de l'extrémité d'insertion (6).

10. Boulon fileté selon la revendication 5 ou l'une quelconque des revendications 6 à 9, quand elles dépendent de la revendication 5, dans lequel ledit flanc oblique (11, 12) a été obtenu par l'intermédiaire d'un traitement d'usinage.

11. Boulon fileté selon l'une quelconque des revendications précédentes, dans lequel l'évidement (7) et/ou le plan de mesure (8) situés sur l'extrémité d'insertion (6) ont été agencés sans opération de traitement finale.

12. Boulon fileté selon l'une quelconque des revendications précédentes, dans lequel le plan de mesure (14) situé au niveau de l'extrémité de tête (3) est fabriqué de la même manière que le plan de mesure situé au niveau de l'extrémité d'insertion, de préférence pendant la même opération.

13. Boulon fileté selon l'une quelconque des revendications précédentes, dans lequel le plan de mesure (8) situé au niveau de l'extrémité d'insertion (6) a été agencé pendant le traitement d'usinage de l'extrémité d'insertion dans une machine de fabrication de pointe reçue dans une machine pour boulons.

14. Boulon fileté selon l'une quelconque des revendications précédentes, dans lequel le plan de mesure (14) situé au niveau de l'extrémité de tête (3) est positionné en creux.
